# EUROPEAN PATENT SPECIFICATION

(11) **EP 2 428 619 B1**
(45) Date of publication and mention of the grant of the patent: **14.01.2015**
(21) Application number: 11180605.5
(22) Date of filing: 08.09.2011
(51) Int. Cl.: E02F 9/08

(54) **Working vehicle**
Nutzfahrzeug
Véhicule de travail

(30) Priority: 10.09.2010 JP 2010203455
(43) Date of publication of application: 14.03.2012
(73) Proprietor: Hitachi Construction Machinery Co., Ltd., Bunkyo-ku, Tokyo 112-8563 (JP)
(72) Inventor: Kawamoto, Junya, Tsuchiura-shi, Ibaraki 300-0013 (JP); Miyahara, Yasuhiro, Tsuchiura-shi, Ibaraki 300-0013 (JP)
(74) Representative: Jansen, Cornelis Marinus

(56) References cited:
- EP-A1- 1 571 042
- JP-U- H0 414 544
- JP-U- H0 685 148
- JP-U- H04 130 549
- US-A- 2 417 987
- US-A- 3 986 503
- US-A1- 2003 038 446

## Description

### Field of the Invention

The present invention relates to a working vehicle, such as a compact excavator, provided with a step that can be pulled out toward an outer side of a body frame when the step is to be used and can be stored in a direction toward the body frame when the step is not in use.

### Background of the Invention

As a conventional technology of this kind, there is the technology disclosed in JP-A-4-130549 [U]. This conventional technology is applied, for example, to a hydraulic excavator, which is provided with an operator's cab on a frame of a revolving upperstructure, specifically a body frame, and also with a step below a door of the operator's cab. This step is pivotally supported on a shaft arranged on an outer side wall of the frame of the revolving upperstructure via a link mechanism. Upon climbing up to or down from the operator's cab, the step is used in such a way that it is downwardly pivoted to be pulled out toward an outer side of the frame of the revolving upperstructure. When the step is not in use, on the other hand, the step is pivoted upwardly in a direction toward the frame of the revolving upperstructure.

In the above-described conventional technology, the shaft is arranged on the outer side wall of the frame of the revolving upperstructure, specifically the body frame and the step is accordingly disposed on the outer side of the frame of the revolving upperstructure even when the step is in a stored position. The conventional technology, therefore, involves a potential problem in that the step in such a stored position may interfere with an object located around the hydraulic excavator as a result of an operation of the hydraulic excavator, for example, a swing operation of the revolving upperstructure. If such an interference occurs, a concern then arises in that the step may be broken or the object around the hydraulic excavator may be damaged. Especially when the hydraulic excavator is a small machine which like a compact excavator, is often used in small work spaces as in a town, there is a high risk of the above-mentioned interference of the step and the object located around the small machine.

Moreover, the above-mentioned conventional technology is required to fabricate the step and shaft with a large thickness and a large diameter, respectively, to assure the provision of high strength to them, because a load applied onto the step, specifically the body weight of an operator or the like is borne by the step and shaft. Therefore, the above-mentioned conventional technology requires higher material cost, and tends to result in higher manufacturing cost. The above-mentioned conventional technology also requires the link mechanism so that its construction is complex and includes a greater number of members. In this regard too, the above-mentioned conventional technology tends to lead to higher manufacturing croat.

US 2417987 discloses a foldable step for streamlined vehicle bodies, such as aircraft. In its folded position, the step is disposed wholly within the inter-frame space in the vehicle frame without projecting inwardly beyond the frame.

### Summary of the Invention

The invention is set forth and characterized in the main claim, while the dependent claims describe other characteristics of the invention.

With the foregoing circumstances of the above-mentioned conventional technology in view, the present invention has as an object thereof the provision of a working vehicle which can prevent an interference between a step in a stored position and an object located around a body frame.

To achieve the above-described object, the present invention provides, in one aspect thereof, a working vehicle comprising the combined features of claim 1.

According to the present invention constructed as described above, an upward pivoting of the step about the shaft can bring the step into the stored position where the step is in storage in the storage compartment. On the other hand, a downward pivoting of the step, which is in the stored position, such that the step is caused to extend toward the outer side of the body frame can bring the step into the usable position where the step can be used upon climbing up to or down from the operator's cab.

In the above-mentioned stored position of the step, the storage compartment and shaft are arranged inside the body frame, so that the step is also located inside the body frame and is held in place such that the step does not extend to the outer side of the body frame. It is, therefore, possible to prevent an interference between the step in the stored position and an object located around the body frame.

The present invention may also be characterized in that in the above-described invention, the body frame also serves as a load bearing member for bearing a load transmitted via the step when the step is in use. In the invention constructed as described immediately above, a load transmitted via the step which is in use, specifically the body weight of an operator or the like applied onto the step is borne by the body frame which also serves as the load bearing member. As the body frame is a structural member having high strength, the step and shaft can be limited in strength to their minimum necessary levels.

In the invention constructed as described above, the cut-off portions of the step are maintained in engagement with the body frame when the step is in use, so that positional displacements of the step can be reduced, force to be transmitted to the shaft upon application of a load onto the step can be reduced as much as possible, and a large majority of the load applied onto the step can be transmitted to the body frame.

In the invention constructed as described above, the step in the stored position can be stably held in an upright position by the step-holding mechanism without falling down, and therefore, the prevention of an interference between an object located around the body frame and the step can be assured further.

The present invention may also be characterized in that in the above-described invention, the working vehicle is a compact excavator provided with a revolving upperstructure mounted on the travel base, carrying the operator's cab arranged thereon and supporting the working equipment attached thereto; the body frame comprises a revolving frame making up a lower part of the revolving upperstructure; the revolving frame comprises a lower frame, an upper frame disposed above the lower frame, and a reinforcing member arranged upright between the lower frame and the upper frame and having an opening toward an outer side of the revolving frame; and the storage compartment is defined by the reinforcing member.

In the invention constructed as described immediately above, the reinforcing member which defines the storage compartment for the step is included in the revolving frame. Therefore, it is basically sufficient to provide only the shaft and step as members associated with the disposition of the step, and the step can be disposed as a simple structure of a smaller number of members. In addition, it can be assured to prevent an interference between the step, which is in the stored position in the compact excavator often used in a narrow working environment, and an object located around the compact excavator.

The working vehicle according to the present invention is provided with the storage compartment arranged inside the body frame for storing the step, and the shaft that supports the step pivotally thereon is arranged in the storage compartment. In the stored position, the step can hence be located inside the body frame, thereby making it possible to prevent an interference between the step in the stored position and an object located around the body frame and thus to eliminate the conventional concern that by the above-mentioned interference, the step may be broken or the object located around the body frame may be damaged.

### Brief Description of the Drawings

These and other characteristics of the invention will be clear from the following description of preferred embodiments, given as non-restrictive examples, with reference to the attached drawings wherein:
FIG. 1 is a side view illustrating a compact excavator as a first embodiment of the working vehicle according to the present invention, in which a step is in a usable position;
FIG. 2 is an enlarged fragmentary view of FIG. 1;
FIG. 3 is a front view illustrating the compact excavator as the first embodiment, in which the step is in the usable position;
FIG. 4 is an enlarged fragmentary view of FIG. 3;
FIG. 5 is a plan view illustrating the compact excavator as the first embodiment, in which the step is in the usable position;
FIG. 6 is an enlarged fragmentary view of FIG. 5;
FIG. 7 is a fragmentary perspective view of a revolving frame in the compact excavator as the first embodiment, in which the step is in the usable position, as viewed from one direction;
FIG. 8 is a fragmentary perspective view of the revolving frame in the compact excavator as the first embodiment, in which the step is in the usable position, as viewed from another direction;
FIG. 9 is a fragmentary side view of the compact excavator as the first embodiment, in which the step is in a stored position;
FIG. 10 is a fragmentary front view of the compact excavator as the first embodiment, in which the step is in the stored position;
FIG. 11 is a fragmentary plan view of the compact excavator as the first embodiment, in which the step is in the stored position;
FIG. 12 is a fragmentary perspective view of the revolving frame in the compact excavator as the first embodiment, in which the step is in the stored position, as viewed from one direction;
FIG. 13 is a fragmentary perspective view of the revolving frame in the compact excavator as the first embodiment, in which the step is in the stored position, as viewed from another direction;
FIGS. 14a through 14d illustrate the step disposed in the compact excavator as the first embodiment, in which FIG. 14a is a plan view, FIG. 14b is a front view, FIG. 14c is a side view, and FIG. 14d is a perspective view;
FIGS. 15a through 15d illustrate a reinforcing frame arranged in a compact excavator as a second embodiment of the working vehicle according to the present invention, in which FIG. 15a is a plan view, FIG. 15b is a front view, FIG. 15c is a side view, and FIG. 15d is a perspective view;
FIGS. 16a through 16d illustrate a step disposed in the compact excavator as the second embodiment, in which FIG. 16a is a plan view, FIG. 16b is a front view, FIG. 16c is a side view, and FIG. 16d is a perspective view; and

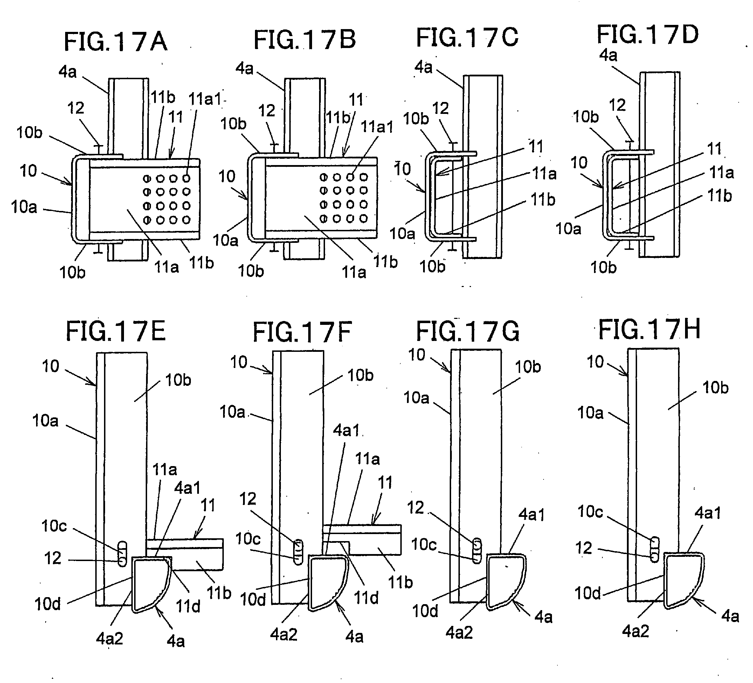

FIGS. 17a through 17h illustrate operations of the step disposed in the compact excavator as the second embodiment, in which FIG. 17a is a plan view showing the step in a usable position together with the associated reinforcing frame, FIG. 17b is a plan view showing the step in a position where the step has been upwardly raised from the position of FIG. 17a to store the step, FIG. 17c is a plan view showing the step in a position where the step has been upwardly pivoted from the position of FIG. 17c, FIG. 17d is a plan view showing the step in a stored position together with the associated reinforcing member, FIG. 17e is a side view corresponding to FIG. 17a, FIG. 17f is a side view corresponding to FIG. 17b, FIG. 17g is a side view corresponding to FIG. 17c, and FIG. 17h is a side view corresponding to FIG. 17d.

### Detailed Description of Preferred Embodiments

Embodiments of the working vehicle according to the present invention will hereinafter be described with reference to the accompanying drawings.

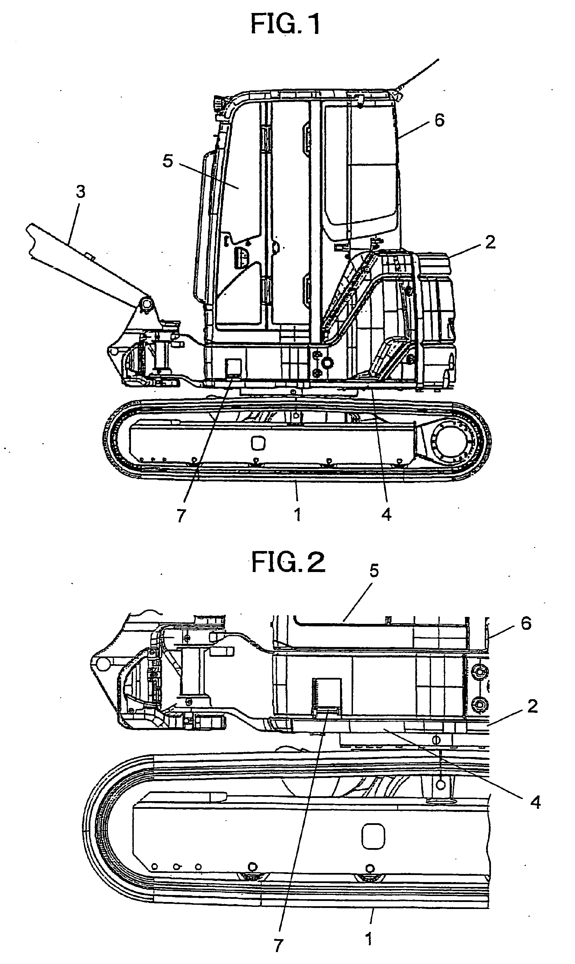

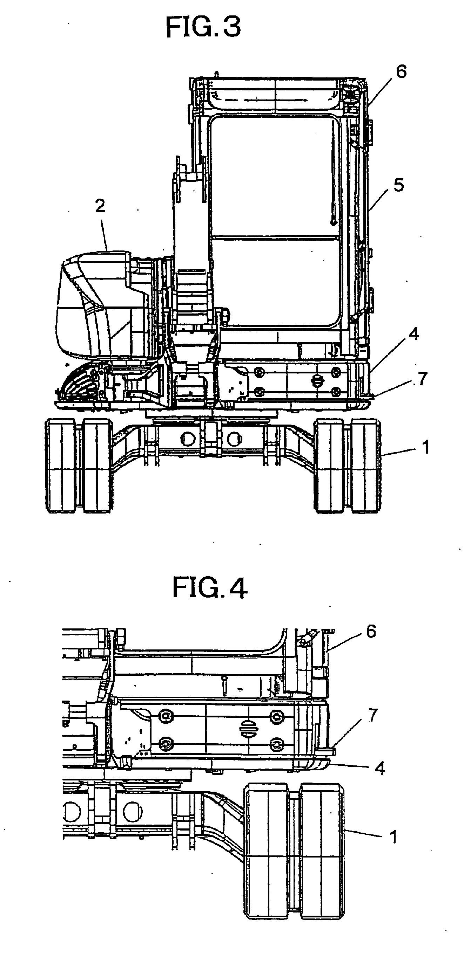

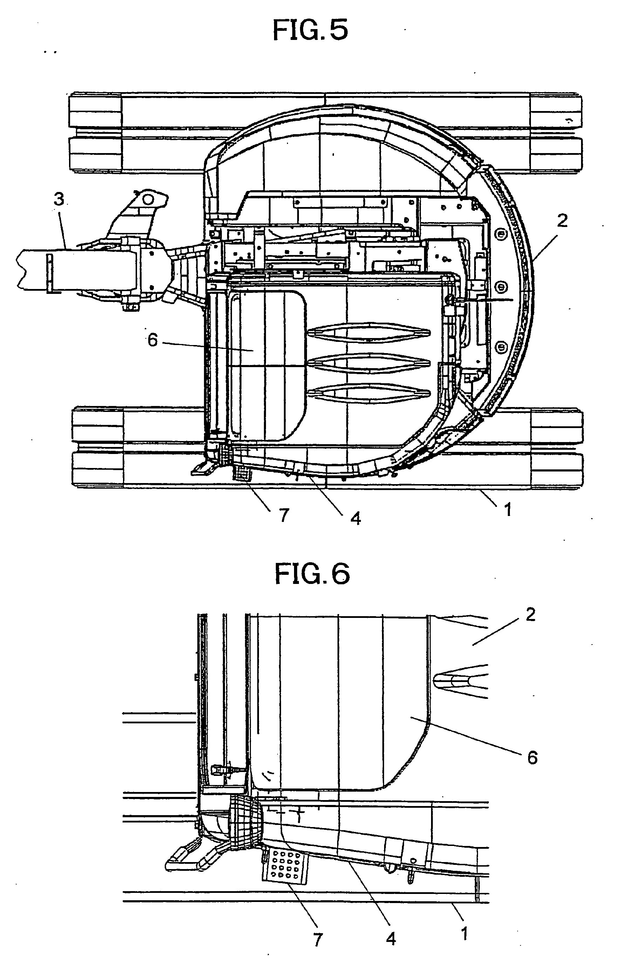

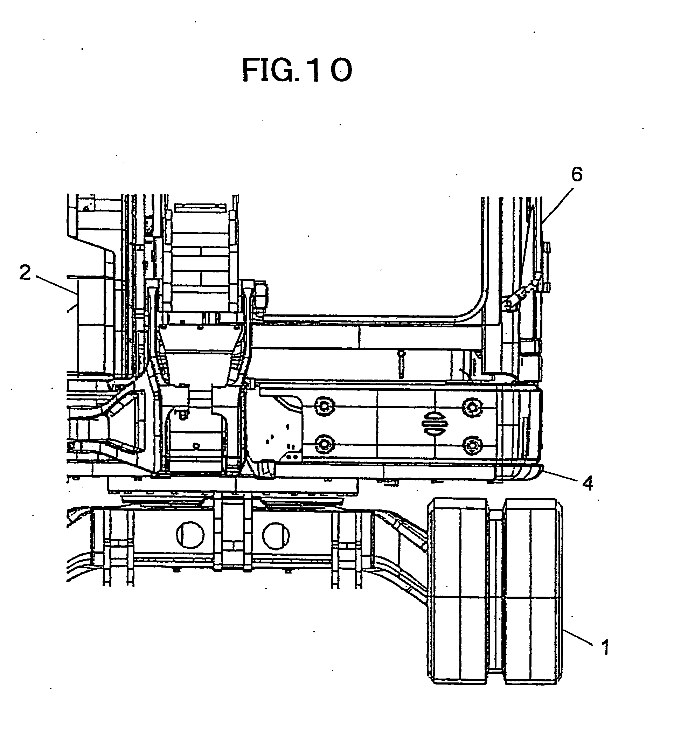

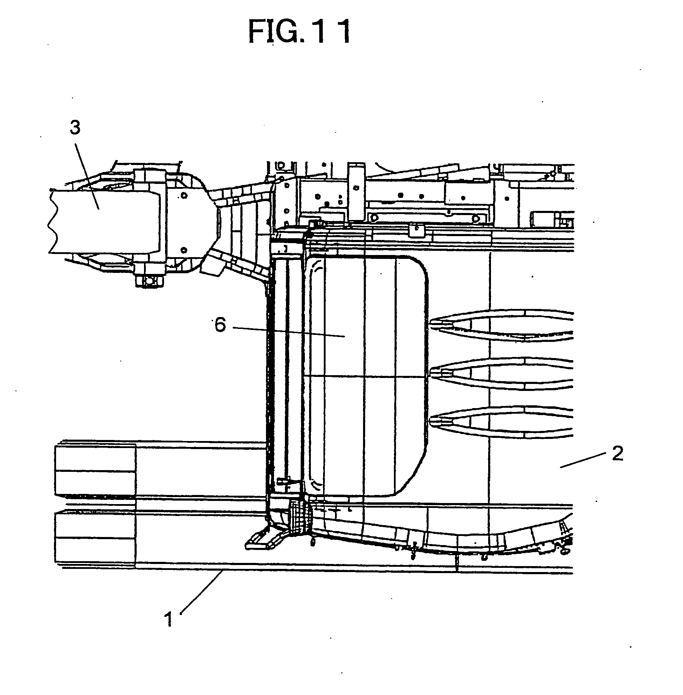

Referring first to FIGS. 1 through 14d, the first embodiment of the working vehicle according to the present invention will be described. The working vehicle according to the present invention is, for example, a compact excavator which is often used in small work environments as in a town. As illustrated in FIG. 1, this compact excavator is provided with a travel base 1, a revolving upperstructure 2 mounted on the travel base 1, and working equipment 3 attached pivotally in up and down directions to the revolving upperstructure 2 to perform digging work or the like. On a body frame making up a lower part of the revolving upperstructure 2, specifically a revolving frame 4, an operator's cab 6 having a closable door 5 is arranged. As illustrated in FIGS. 3 and 5 by way of example, the swing radius of the revolving upperstructure 2 is set equal to or smaller than the width of the travel base 1.

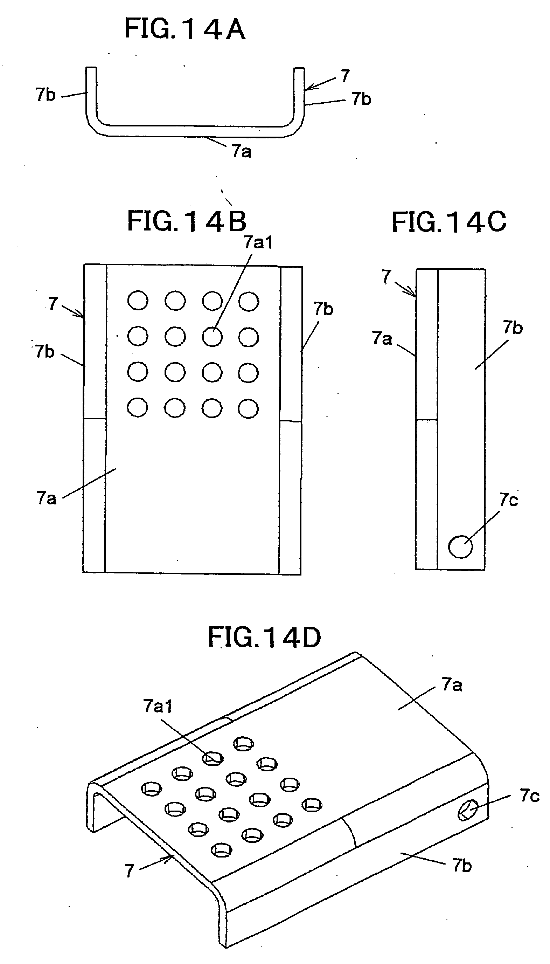

As depicted in FIGS. 2, 4, 6 and so on, a step 7 is disposed below the door 5 of the operator's cab 6. This step 7 is used upon climbing up to or down from the operator's cab 6. As shown in FIGS. 14a through 14d by way of example, this step 7 is formed in a square "U" shape as viewed in transverse cross-section, and is provided with an upper wall 7a and a pair of side walls 7b arranged in conjunction with the upper wall 7a and facing each other. Through the upper wall 7a, many holes 7a1 are formed to prevent slipping of shoes of an operator, who stands on the step 7, and also to facilitate scraping of sticking mud from the shoes. Further, shaft-receiving bores 7c are formed through the paired side walls 7b, respectively.

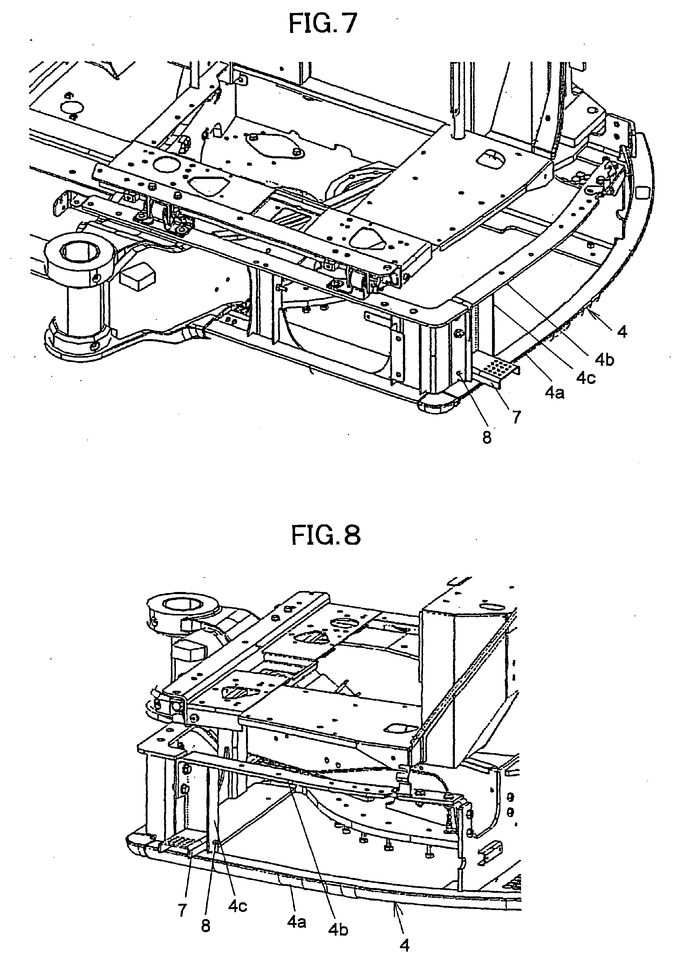

As shown in FIGS. 7 and 8, the revolving frame 4 of the revolving upperstructure 2 is provided with a lower frame 4a, an upper frame 4b disposed above the lower frame 4a, and a reinforcing member 4c arranged upright between the lower frame 4a and the upper frame 4b. The reinforcing member 4c has an opening toward an outer side of the revolving frame 4, and is in a square "U" shape as viewed in transverse cross-section.

The compact excavator as the first embodiment is provided with a storage compartment arranged inside the body frame, specifically the revolving frame 4 for storing the step 7 therein, and a shaft 8 is arranged in the storage compartment. The shaft 8 supports the step 7 pivotally between the usable position and the stored position. The above-mentioned storage compartment is formed, for example, of the reinforcing member 4c included in the revolving frame 4, and the shaft 8 that pivotally supports the step 7 is secured to a lower part of the reinforcing member 4c. This shaft 8 is inserted in the shaft-receiving bores 7c formed in the side walls 7b of the step 7.

As illustrated in FIGS. 7 and 8, it is designed that, when the step 7 is in the usable position, the side walls 7b of the step 7 are disposed in contact with the lower frame 4a of the revolving frame 4. In other words, the revolving frame 4 that makes up the body frame also serves as a load-bearing member that bears a load transmitted via the step 7 when the step 7 is in use.

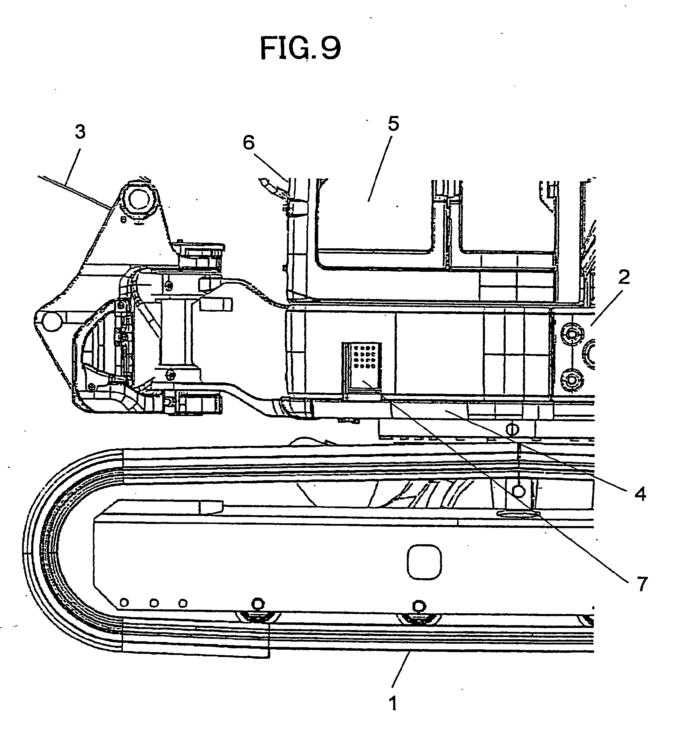

In the compact excavator constructed as the first embodiment as described above, an upward pivoting of the step 7 about the shaft 8 can bring the step 7 into the stored position where the step 7 is in storage inside the reinforcing member 4c as illustrated in FIGS. 9, 12 and 13. On the other hand, a downward pivoting of the step 7, which is in such a stored position, about the shaft 8 causes the step 7 to extend toward the outer side of the revolving frame 4 so that the step 7 can be brought into a usable position where the step 7 can be used upon climbing up to or down from the operator's cab 6 to assist entrance or exit of the operator.

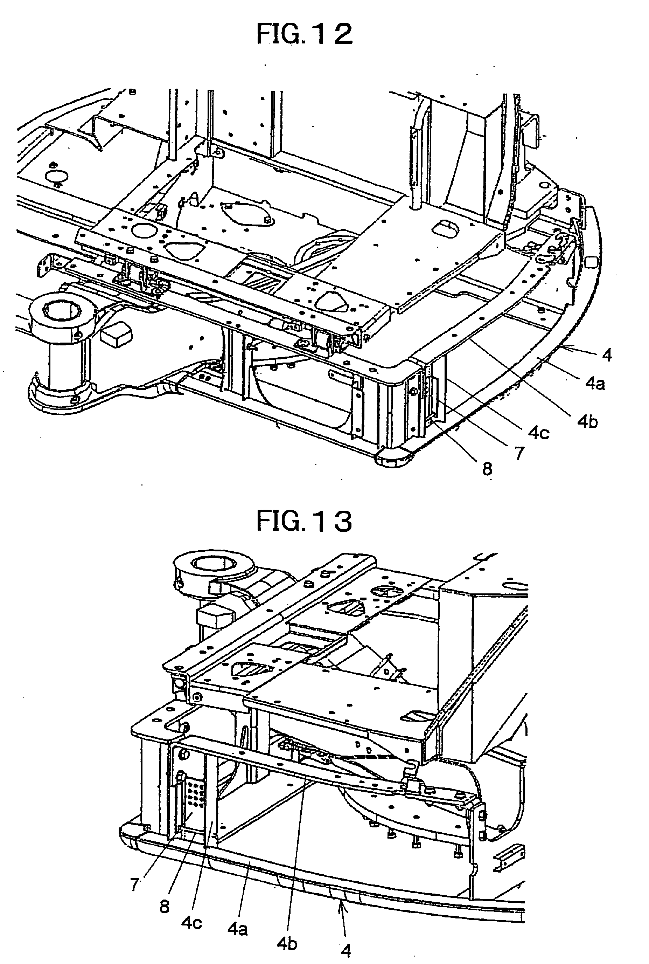

In the above-mentioned stored position of the step 7, the reinforcing member 4c and shaft 8 are also arranged inside the revolving frame 4 as depicted in FIGS. 12 and 13. Therefore, the step 7 is also located inside the revolving frame 4, and is held such that the step 7 does not extend to the outer side of the revolving frame 4. It is, therefore, possible to prevent an interference between the step 7, which is in the stored position, and an object located around the revolving frame 4, for example, upon a swing operation or the like of the revolving upperstructure 2. As a consequence, it is possible to prevent breakage of the step 7 or damage to the object located around the revolving frame 4 by the above-mentioned interference.

According to the first embodiment, a load transmitted via the step 7 which is in use, specifically the body weight of an operator or the like as applied onto the step 7 is borne by the revolving frame 4 which also serves as the load-bearing member. Therefore, the step 7 and shaft 8 can be limited in strength to their minimum necessary levels. This makes it possible to save the material cost, and hence, to lower the manufacturing cost.

For the reinforcing member 4c which defines the storage compartment for the step 7, it is basically sufficient to provide only the shaft 8 and step 7 as members associated with the disposition of the step 7. The step 7 can hence be disposed as a simple structure of a smaller number of members. This also makes it possible to lower the manufacturing cost.

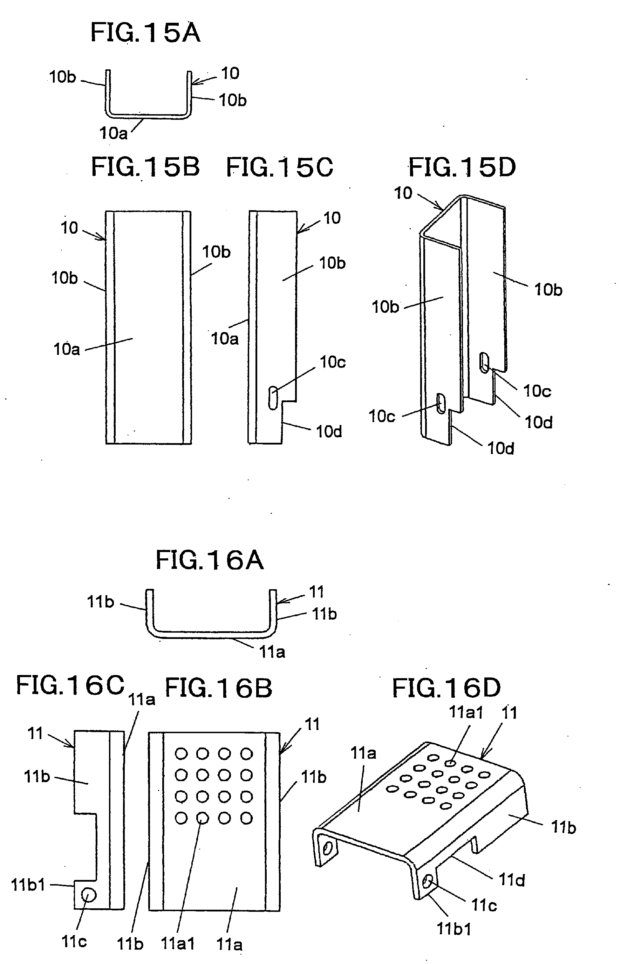

Referring next to FIGS. 15a through 17d, the second embodiment of the working vehicle according to the present invention will be described. This second embodiment is also applied to a similar compact excavator as in the above-described first embodiment. In this second embodiment, as illustrated in FIGS. 15a through 15d, a reinforcing member 10 arranged upright between the lower frame 4a and upper frame 4b of the revolving frame 4 (see FIGS. 7 and 8), in other words, the reinforcing member 10 arranged inside the revolving frame 4 and defining a storage compartment for a step 11 to be described subsequently herein is provided with a rear wall 10a and a pair of side walls 10b arranged in conjunction with the rear wall 10a, and is formed in a square "U" shape as viewed in transverse cross-section. In lower parts of the paired side walls 10b, slots 10c and cut-off portions 10d are formed, respectively. The slots 10c extend in up and down directions. The cut-off portions 10d are formed such that they can engage with the lower frame 4a of the revolving frame 4.

As depicted in FIGS. 16a through 16d, the step 11 disposed in the second embodiment is formed in a square "U" shape as viewed in transverse cross-section, and is provided with an upper wall 11a and a pair of side walls 11b arranged in conjunction with the upper wall 11a and facing each other. Through the upper wall 11a, many holes 11a1 are formed to prevent slipping of shoes of an operator, who stands on the step 7, and also to facilitate scraping of sticking mud from the shoes. In the paired side walls 11b, cut-off portions 11d and shaft-receiving bores 11c are formed, respectively. The cut-off portions 11d are engageable with the lower frame 4a of the revolving frame 4. Into the shaft-receiving bores 11c, a shaft 12 (see FIGS. 17a through 17h) for pivotally supporting the step 11 thereon is to be inserted. The remaining construction is equal to the corresponding construction in the above-described first embodiment.

With reference to FIGS. 17a through 17h, operations of the step 11 disposed in the second embodiment of the working vehicle according to the present invention will be described hereinafter.

In this second embodiment, when the step 11 is in a usable position, the respective cut-off portions 11d in the paired side walls 11b of the step 11 are in engagement with an upper wall 4a1 of the lower frame 4a included in the revolving frame 4 as depicted in FIGS. 17a and 17e. The shaft 12, which is inserted in the shaft-receiving bores 11c of the step 11 and pivotally supports the step 11, is inserted in the respective slots 10c of the paired side walls 10b of the reinforcing member 10, and in such a usable position, is located at lower ends of the slots 10c. It is to be noted that the reinforcing member 10 is fixed on the lower frame 4a with its cut-off portions 10d being in contact with the upper wall 4a1 and a rear wall 4a2 of the lower frame 4a.

In order to bring the step 11 from such a usable position into a stored position, the step 11 can be operated as will be described hereinafter. As shown in FIGS. 17b and 17f, the step 11 is raised until the shaft 12 moves, for example, to near upper ends of the slots 10c formed in the side walls 10b of the reinforcing member 10. In this position, the step 11 is upwardly pivoted about the shaft 12 as illustrated in FIGS. 17c and 17g. Finally, the step 11 is allowed to move down until the shaft 12 reaches the lower ends of the slots 10c formed in the side walls 10b of the reinforcing member 10. In this manner, lower edges 11b1 (see FIGS. 16c and 16d) of the step 11 are brought into sliding contact with the rear wall 4a2 of the lower frame 4a of the revolving frame 4, and as illustrated in FIGS. 17d and 17h, the step 11 is brought into the stored position where the step 11 is in storage inside the reinforcing member 10.

It is to be noted that by the above-described, respective slots 10c formed in the paired side walls 10b of the reinforcing member 10, the shaft 12 inserted in these slots 10c and the rear wall 4a2 of the lower frame 4a, a step-holding mechanism is constructed to prevent the step 11 from falling toward the outer side of the revolving frame 4 while the step 11 is in storage in the reinforcing member 10.

The second embodiment constructed as described above is also provided with the reinforcing member 10 arranged inside the revolving frame 4 and defining the storage compartment for storing the step 11 therein, and the shaft 12 that pivotally supports the step 11 is arranged on the reinforcing member 10. The second embodiment can, therefore, bring about similar advantageous effects as the first embodiment.

The second embodiment can also bring about a further advantageous effect. When the step 11 is in use, the cut-off portions 11d of the step 11 are in engagement with the lower frame 4a of the revolving frame 4. As a consequence, positional displacements of the step 11 can be reduced, force to be transmitted to the shaft 12 upon application of a load onto the step 11 can be reduced as much as possible, and a large majority of the load applied onto the step 11 can be transmitted to the lower frame 4a. The strength of the shaft 12 can be set low accordingly.

Owing to the above-described step-holding mechanism, the second embodiment can hold the stored step 11 in a stable upright position without causing it to fall down, and therefore, the prevention of an interference between an object located around the revolving frame 4 and the step 11 can be assured further.

## Claims

1. A working vehicle comprising a travel base (1), a body frame mounted on the travel base, working equipment (3) attached to the body frame, an operator's cab (6) arranged on the body frame, a step (7;11) which is disposed below a door (5) of the operator's cab, is extendable outward from the body frame when in use and is storable toward the body frame when not in use, and a shaft (8;12) supporting the step pivotally between a usable position and a stored position, **characterized in that**:
the working vehicle is provided with a storage compartment arranged inside the body frame for stering the step (7; 11) therein; and the shaft (8;12) is arranged in the storage compartment,
wherein the step (11) has cut-off portions (11d) which are in engagement with the body frame when the step is in the usable position, and
wherein the working vehicle is provided with a step-holding mechanism (10c,12,4a2) for preventing the step (11) from falling in an outward direction relative to the body frame when the step is in storage in the storage compartment.

2. The working vehicle as in claim 1, wherein the body frame also serves as a load bearing member for bearing a load transmitted via the step (7; 11) when the step is in use.

3. The working vehicle as in any one of claims 1 or 2, wherein the working vehicle is a compact excavator provided with a revolving upperstructure (2) mounted on the travel base (1), carrying the operator's cab arranged thereon and supporting the working equipment attached thereto, the body frame comprises a revolving frame (4) making up a lowerpart of the revolving upperetructure; the revolving frame (4) comprised a lower frame (4a), an upper frame (4b) disposed above the lower frame, and a reinforcing member (4c;10) arranged upright between the lower frame and the upper frame and having an opening toward an outer side of the revolving frame; and the storage compartment is defined by the reinforcing member (4c;10).

## Patentansprüche

1. Arbeitsfahrzeug, umfassend ein Fahrgestell (1), einen auf dem Fahrgestell montierten Karosserierahmen, ein an dem Karosserierahmen befestigtes Arbeitsgerät (3), eine auf dem Karosserierahmen angeordnete Fahrerkabine (6), eine Stufe (7, 11), die unterhalb einer Tür (5) der Fahrerkabine angeordnet ist, von dem Karosserierahmen nach außen ausfahrbar ist, wenn sie in Benutzung ist, und zum Karosserierahmen hin aufbewahrbar ist, wenn sie nicht in Benutzung ist, und eine Welle (8; 12), die die Stufe zwischen einer benutzbaren Position und einer aufbewahrten Position schwenkbar lagert, **dadurch gekennzeichnet, dass**:
das Arbeitsfahrzeug mit einem Aufbewahrungsabteil im Inneren des Karosserierahmens ausgestattet ist, um die Stufe (7; 11) darin aufzubewahren, und die Welle (8; 12) in dem Aufbewahrungsabteil angeordnet ist,
wobei die Stufe (11) abgeschnittene Teile (11d) hat, die mit dem Karosserierahmen in Eingriff sind, wenn die Stufe in der benutzbaren Position ist, und
wobei das Arbeitsfahrzeug mit einem Stufenhaltemechanismus (10c, 12, 4a2) ausgestattet ist, um die Stufe (11) daran zu hindern, in eine Richtung nach außen relativ zum Karosserierahmen zu fallen, wenn die Stufe im Aufbewahrungsabteil in Aufbewahrung ist.

2. Arbeitsfahrzeug gemäß Anspruch 1, wobei der Karosserierahmen auch als ein Lasttrageelement dient, um eine über die Stufe (7; 11) übertragene Last zu tragen, wenn die Stufe in Benutzung ist.

3. Arbeitsfahrzeug gemäß einem der Ansprüche 1 oder 2, wobei das Arbeitsfahrzeug ein Kompaktbagger ist, der mit einer drehbaren Oberstruktur (2) ausgestattet ist, der auf dem Fahrgestell (1) montiert ist, der die auf diesem angeordnete Fahrerkabine trägt und das an diesem befestigte Arbeitsgerät trägt; der Karosserierahmen einen drehbaren Rahmen (4) umfasst, der einen unteren Teil der drehbaren Oberstruktur bildet; der drehbare Rahmen (4) einen unteren Rahmen (4a), einen oberen Rahmen (4b), der über dem unteren Rahmen angeordnet ist, und ein Verstärkungselement (4c; 10) umfasst, das aufrecht zwischen dem unteren Rahmen und dem oberen Rahmen angeordnet ist und eine Öffnung zu einer Außenseite des drehbaren Rahmens hin hat; und das Aufbewahrungsabteil durch das Verstärkungselement (4c; 10) definiert ist.

## Revendications

1. Véhicule de travail comprenant une base de déplacement (1), un châssis monté sur la base de déplacement, un équipement de travail (3) fixé sur le châssis, une cabine d'opérateur (6) agencée sur le châssis, un marchepied (7 ; 11) qui est disposé au-dessous d'une porte (5) de la cabine d'opérateur, est extensible vers l'extérieur à partir du châssis lorsqu'il est utilisé et peut être rangé vers le châssis lorsqu'il n'est pas utilisé, et un arbre (8 ; 12) supportant le marchepied de manière pivotante entre une position utilisable et une position rangée, **caractérisé en ce que** :
le véhicule de travail est muni d'un compartiment de stockage agencé à l'intérieur du châssis pour ranger le marchepied (7 ; 11) à l'intérieur de ce dernier ; et l'arbre (8 ; 12) est agencé dans le compartiment de stockage,
dans lequel le marchepied (11) a des parties coupées (11d) qui sont en mise en prise avec le châssis lorsque le marchepied est dans la position utilisable, et
dans lequel le véhicule de travail est muni d'un mécanisme de support de marchepied (10c, 12, 4a2) pour empêcher le marchepied (11) de tomber dans une direction vers l'extérieur par rapport au châssis lorsque le marchepied est rangé dans le compartiment de stockage.

2. Véhicule de travail selon la revendication 1, dans lequel le châssis sert également d'élément de support de charge pour supporter une charge transmise via le marchepied (7 ; 11) lorsque le marchepied est utilisé.

3. Véhicule de travail selon l'une quelconque des revendications 1 ou 2, dans lequel le véhicule de travail est une excavatrice compacte prévue avec une structure supérieure pivotante (2) montée sur la base de déplacement (1), portant la cabine de l'opérateur agencée sur cette dernière, et supportant l'équipement de travail fixé sur cette dernière ; le châssis comprend un bâti pivotant (4) composant une partie inférieure de la structure supérieure pivotante ; le bâti pivotant (4) comprend un bâti inférieur (4a), un bâti supérieur (4b) disposé au-dessus du bâti inférieur et un élément de renforcement (4c ; 10) agencé droit entre le bâti inférieur et le bâti supérieur et ayant une ouverture vers un côté externe du bâti pivotant ; et le compartiment de stockage est défini par l'élément de renforcement (4c ; 10).
